# EUROPEAN PATENT APPLICATION

(11) **EP 1 653 740 A1**
(43) Date of publication of application: **03.05.2006**
(21) Application number: 04748278.1
(22) Date of filing: 02.08.2004
(51) Int. Cl.: H04N 7/01

(54) **IMAGE PROCESSING APPARATUS AND IMAGE PROCESSING METHOD**

(30) Priority: 06.08.2003 JP 2003288223
(71) Applicant: SONY CORPORATION, Tokyo 141-0001 (JP)
(72) Inventor: MORITA, Hideo, Shinagawa-ku, Tokyo 1410001 (JP)
(74) Representative: Melzer, Wolfgang
(86) International application number: PCT/JP2004/011386
(87) International publication number: WO 2005/015908

(57) **Abstract**

It is prevented at a time that a moving image portion is erroneously determined on a screen having a cyclic pattern moving at a constant speed and that edge portions of a still image surrounded by a moving image is subjected to moving image processing. A motion detection portion (3, 51) for receiving as an input pixel data Pi(0) of an interlaced image and pixel data Pi(+2F) delayed by two fields (2F) thereof, a history value generation portions (52, 53) for generating a history value (Hk) showing the number of times that determination is continuously made to be "a still image" based on the motion detection result (Dif(0)), a pixel data interpolation portion (4) for mixing pixel data (Pm) by interpolation in a field and pixel data (Ps) by interpolation between a plurality of fields based on pixel data of the interlaced image at a mixture ratio (Rmix) in accordance with the motion detection result (Dif(0)) and the history value (Hk) are provided. The larger the history value (Hk) is, the larger amount of pixel data (Ps) by interpolation between fields the pixel data interpolation portion (4) mixes.

## Description

### TECHNICAL FIELD

The present invention relates to an image processing apparatus and an image processing method for detecting a motion of an interlaced image and generating data for complementing line to obtain a noninterlaced image by a complementing method in accordance with the result.

### BACKGOUND ART

Current television signal formats are roughly classified in an interlaced signal format assuming interlaced scanning and a noninterlaced signal format assuming noninterlaced scanning. The interlaced scanning is also called as "skipping" scanning and is a method of scanning every other line on 525 or 1125 scanning lines composing one screen of a television image. In this method, one display screen (one frame) is generated by interlaced scanning for two times, and one frame is composed of two scanning screens (first and second fields) having alternating scanning lines. On the other hand, noninterlaced scanning is not "skipping" scanning and is a method of scanning every scanning line successively.

In an image display device, for example, when displaying other still image on a part of a moving image, it is necessary to display the still image by converting an interlaced signal to a noninterlaced signal to suppress flickering on the still image and to attain a high-quality image. The conversion is also called as IP (Interlace/Progressive) conversion, and an image display device provided with an IP conversion function for multiscreen displaying is known. Hereinafter, conversion of interlace and non-interlace will be called as IP conversion.

Also, depending on kinds of an image display panel, particularly like an image display panel using self-luminous PDP (plasma display panel) and LED (light emitting diode), etc., there are those driven by a noninterlaced progressive signal, and they are provided with an IP conversion function.

There are a variety of IP conversion methods, but a motion adaptive IP conversion method for detecting a motion of an image from difference of image data between fields and performing interpolation in a field for a moving image and interpolation between fields for a still image to generate line data adaptively in accordance with a kind of the image (a moving image or a still image) for obtaining a high-quality image has been widely used. In this method, image data of a new line is generated by adaptively mixing image data suitable to a moving image obtained by interpolating from an image in a field as an object of generating line data (hereinafter, referred to as a moving image interpolation data) and image data suitable to a still image obtained by interpolating from images between two fields including a field as an object of generating line data (hereinafter, referred to as a still image interpolation data). When determining the mixing ratio, based on a frame difference of previous and following fields of a pixel to be interpolated, a method of heightening the mixing ratio of moving image interpolation data when the frame difference is large, and heightening the mixing ratio of still image interpolation data when the frame difference is small has been used.

In the motion adaptive IP conversion method, if the determination is made to be closer to a moving image (that is, determining to heighten the mixture ratio of moving image interpolation data) when determining the mixture ratio, a large failure is not caused to the screen because the moving image interpolation is processing in the same field. On the other hand, if a moving image is erroneously determined to be a still picture, one screen is created from two fields being different data in accordance with the motion, contour of the image becomes aliasing, horizontal stripe becomes highly visible or, in bad cases, the image looks double, so that failure is caused as a picture. Therefore, in the conventional motion adaptive IP conversion, there was a tendency that the determination was made to be close to a moving image.

However, when a still picture is not correctly determined to be a still image, a still image having high vertical resolution cannot be generated, so that the failure as a picture was prevented by sacrificing vertical resolution of a still image in the conventional motion adaptive IP conversion for determining to be closer to a moving image.

This basic IP conversion method was developed, and there has been proposed an IP conversion method for using information of more fields, such as six fields, than adjacent two fields so as to reflect information of different pixel information of pixels to be interpolated in terms of time and space (for example, refer to the Japanese Unexamined Patent Publication No. 2002-185933, which will be referred to as the prior art article 1 below) .

In the prior art article 1, as a method of reflecting larger information of different pixels in terms of time, a difference of intricately combined fields in a wide range is calculated, for example, a difference of current field data and two-field delayed data, a difference of one-field delayed data and three-field delayed data, a difference of two-field delayed data and six-field delayed data, and a difference of current field delayed data and six-field delayed data. The respective differences are compared with a predetermined threshold value to set a flag, a logical add of the obtained flag data is calculated, and the mixture ratio of a moving image and still image is determined based on the logical add of the flag data. Also, as the case of using information of spatially different pixels, as described in the above prior art article 1, the case of performing interpolation calculation on four lines above and below a pixel to be interpolated may be mentioned.

In these methods, the mixture ratio is determined by reflecting information of different pixels to be interpolated in terms of time and space, so that, for example, in the case where a cyclic pattern moves at an approximately adaptive speed to the cycle, a moving image part liable to be erroneously detected as a still image because data does not change in micro-scale when seeing for a certain time interval is surely detected "to be a moving image". Also, for example, even when letters (tickers), such as alphabets, move on a screen, the case where a moving image is erroneously detected to be a still image in a part of pixels decreases. Accordingly, by using an IP conversion method described in the prior art article 1, it is possible to prevent deterioration of image quality, such that edges of an image look aliasing caused by erroneously detecting a moving image as a still image.

However, in the IP conversion method described in the prior art article 1, a large number of fields are referred to for discriminating a moving image from a still image, and a large capacity field memory is necessary.

Also, for example, in the case where still tickers created by PC (personal computer), etc. are superimposed to be displayed on a moving image shot by a camera in a TV program, when a too wide range of peripheral pixels or a large number of fields are referred, an effect of such wide range of detection results appears as an adverse effect. Namely, there is a possibility that determination to be closer to a moving image is made more than necessary at edge portions of a still image (tickers) where the same data should be displayed because the surround is a moving image. In this case, only the edge portions of the still tickers look clearer or more blurred than other ticker portions in some cases. Since tickers have higher frequency components in the horizontal and vertical directions comparing with those in the background a moving image, when the edges become blurred, it is highly visible and the picture quality declines.

On the other hand, as a method of making edge portions of a still image less noticeable on a moving image as a background, there is known an IP conversion method including processing of determining a boundary of a still image and a moving image (for example, refer to the Japanese Patent Publication No. 3347234, which will be referred to as a prior art article 2).

In this method, based on results of motion detection, in other than the case where all of three lines: a current line, an output of the previous line and an output of the following line show a motion or all of the three lines show no motion, it is determined that there is a boundary. Line data is substituted, so that there is no discrepancy between the result of the boundary determination and the result of motion detection.

The IP conversion method described in the prior art article 2 is an excellent method in the point that a large capacity field memory is not used and edge portions of a still image can be made less noticeable on a moving image as a background.

However, in the method described in the prior art article 2, information of a wide range of pixels is not reflected, so that the subject to be overcome by the prior art article 1 explained above, that is, the problem that a moving image part (a moving cyclic pattern and moving tickers) is erroneously determined to be a still image on a screen having a moving cyclic pattern or moving tickers moving at a constant speed cannot be solved.

### DISCLOSURE OF THE INVENTION

An object of the present invention is to prevent a moving image portion from being erroneously determined as a still image on a screen having a cyclic pattern moving at a constant speed or moving tickers, etc. and edge portions of a still image from being subjected to a moving image processing and becomes highly visible on a moving image as a background.

An image processing apparatus according to the present invention, for converting an interlaced image data to a noninterlaced image data, comprises: a motion detection portion (3, 51) for comparing pixel data of an interlaced image (pixel data Di(0) and Di(+2F) comprising field screen Pi(0) and Pi(+2F), hereinafter, be described by reference numerals of the field screen to which belonging the pixel data in consideration of correspondence to drawings) to perform a motion detection; a history value generation portions (52, 53) for generating a history value (Hk) showing the number of times that determination is continuously made to be "a still image" based on a motion detection result (Dif(0)) from the motion detection portion; and a pixel data interpolation portion (4) for mixing a pixel data (Pm) generated by interpolation in a field and a pixel data (Ps) generated by interpolation between a plurality of fields based on pixel data of the interlaced image at a mixture ratio (Rmix) in accordance with the motion detection result (Dif (0)) and the history value (Hk), wherein the larger the history value (Hk) is, the larger amount of pixel data (Ps) generated by interpolation between fields the pixel data interpolation portion (4) mixes.

The pixel data interpolation portion comprises; an in-field interpolation portion (41) for generating the pixel data (Pm) by interpolation from a pixel data (Pi(+F)) in a filed; an inter-field interpolation portion (42) for generating the pixel data (Ps) by interpolation from pixel data (Pi(+F) and Pi(+2F)) in a plurality of filed; a pixel data mixing portion (43) for mixing the pixel data (Pm) from the in-field interpolation portion (41) and the pixel data (Ps) from the inter-field interpolation portion (42) at a predetermined mixture ratio (Rmix); and a mixture ratio setting portion (44) for changing the mixture ratio (Rmix) determined by the motion detection result (Dif(0)) of the motion detection portion (3, 51) and the history value (Hk) in such a way that the larger the history value (Hk) is, the higher a ratio of the pixel data (Ps) from the inter-field interpolation portion (42) becomes.

An image processing method according to the present invention of converting an interlaced image data to a noninterlaced image data, comprises the steps of: motion-detecting by comparing pixel data (Pi(0) and Pi(+2F)) of an interlaced image pixel-by-pixel between frames to perform a motion detection; generating a history value (Hk) showing the number of times that determination is continuously made to be "a still image" based on a result of the motion detection; and interpolating by mixing pixel data (Pm) generated by interpolation in a field and pixel data (Ps) generated by interpolation between a plurality of fields based on pixel data of the interlaced image at a mixture ratio (Rmix) in accordance with the motion detection result (Dif(0)) and the history value (Hk), wherein the larger the history value (Hk) is, the larger amount of pixel data (Ps) generated by interpolation between fields mixes.

The interpolating step of pixel data further comprises; in-field interpolating by generating the pixel data (Pm) of a line having no pixel data in a field by interpolation from pixel data (Pi(+F)) in the filed; inter-field interpolating by generating the pixel data (Ps) by interpolation from pixel data (Pi(+F) and Pi(+2F)) in a plurality of filed; mixing of pixel data by mixing the pixel data (Pm) generated by the in-field interpolating and the pixel data (Ps) generated by the inter-field interpolation portion (42) at a predetermined mixture ratio (Rmix); and setting of a mixture ratio by changing the mixture ratio (Rmix) determined by the motion detection result (Dif(0)) of the motion detection and the history value (Hk) in such a way that the larger the history value (Hk) is, the higher a ratio of the pixel data (Ps) generated by the inter-field interpolatiing becomes.
*In the present invention, as a result of motion detection of pixel data of an interlaced image by a motion detection portion (3, 51), when there is no difference or only a small difference in the pixel data, it is determined as a still image, while when the difference is large, it is determined as a moving image. As to generation of a history value, a history value (Hk) as the number of times that determination is continuously made to be a still image is generated for each pixel. In a pixel data interpolation portion (4) (or in an interpolation step), an interpolation method of pixels, for which data should be newly created, is determined in accordance with the generated history value (Hk). In detail, the pixel data interpolation portion (4) comprises an in-field interpolation portion (41) adaptive to a moving image, a inter-field interpolation portion (42) adaptive to a still image, a pixel data mixture portion (43) for mixing outputs of both of the interpolation portions at a predetermined ratio (Rmix), and a mixture ratio setting portion (44) for setting the mixture ratio (Rmix). The mixture ratio setting portion (44) determines the above mixture ratio (Rmix), so that the larger the history value (Hk) is, the closer the interpolation becomes to a still image, that is, the ratio of pixel data (Ps) generated by the inter-field interpolation becomes high.

In the image processing as above, for example, in the case where a repeating pattern at a predetermined cycle moves at a speed adaptable to the cycle, at a position of a pixel where the pattern is repeatedly displayed, there is a pattern portion always determined to be a still image when seeing at a certain time interval. However, the number of times that determination continuously made to be a still image for each pixel, that is a history value (Hk), is counted in the present invention, so that the history value (Hk) of the still image becomes intermittent at a cycle corresponding to a width of the pattern.

Namely, when seeing in perspective by using the history value (Hk), the repeating pattern of a predetermined cycle as above is not determined as a complete still image or a complete moving image. Therefore, a mixture ratio (Rmix) adaptive to the repeating pattern cycle or the moving speed is obtained, and new pixel data (Po) is generated at the pixel position by using the mixture ratio.

Also, when tickers, such as alphabets, move as if it flows, the history value (Hk) becomes intermittent between the letters, so that pixel data (Po) is generated at a position of displaying the tickers by using the mixture ratio (Rmix) adaptive to the letter intervals and the moving speed.

Furthermore, at edge portions of the still image tickers surrounded by a moving image, peripheral pixel information is not reflected and only the history value (Hk) at the pixel becomes information for making the decision, so that the history value (Hk) at the pixel depends on a display time of the tickers and determination is made to be sufficiently large and closer to a complete still image. Accordingly, new pixel data (Po) is generated by a mixing ratio (Rmix) being close to the still image at edge portions of the still image tickers.

### BRIEF DESCRIPTION OF DRAWINGS

FIG. 1 is a block diagram of an image processing apparatus according to a first embodiment.
FIG. 2 is a view showing a positional relationship of three continuing field screens.
FIG. 3 is a view showing a method of inquiring a frame difference in a positional relationship of three screens when seeing from the front surface A side shown in FIG. 2.
FIG. 4 is a view showing in-field interpolation at a positional relationship of three screens in the same way as in FIG. 3.
FIG. 5 is a view showing inter-field interpolation at a positional relationship of three screens in the same way as in FIG. 3.
FIG. 6 is a flowchart of history value generation processing.
FIG. 7 is a flowchart of mixture ratio setting processing.
FIG. 8 is a graph showing an example of relationship of two input parameters with the mixture ratio in a mixture ratio reference table.
FIG. 9 is a view for explaining transition of the mixture ratio when a circular image moves on a still background.
FIG. 10 is a view showing a screen having still image tickers (alphabet letters) surrounded by a moving image.
FIG. 11 is a block diagram of an image processing apparatus according to a second embodiment.

### BEST MODE FOR CARRYING OUT THE INVENTION

Below, preferred embodiments of an image processing apparatus and an image processing method will be explained with reference to the drawings. The image processing apparatus is realized as an apparatus or an integrated circuit (IC) having a motion adaptive IP conversion function.

### First Embodiment

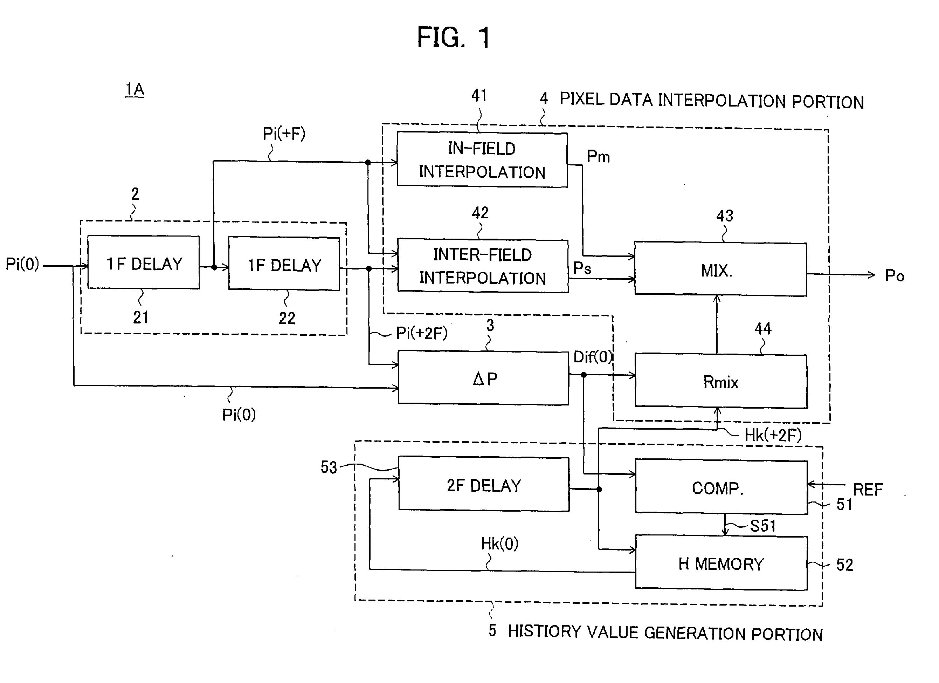

FIG. 1 is a block diagram of an image processing apparatus according to a first embodiment.

An image processing apparatus 1A shown in FIG. 1 roughly comprises a field delay portion 2, a frame difference calculation portion 3, an image data interpolation portion 4 and a history value generation portion 5 of a still image.

The field delay portion 2 comprises a first field delay portion 21 for delaying an input field screen Pi(0) by one field and outputting the same and a second field delay portion 22 for delaying a screen Pi(+F) after delaying by one field (1F) input from the first field delay portion by one field. The second field delay portion 22 outputs a field screen Pi(+2F) delayed by two fields (2F), that is, exactly by one frame.

Here, a display time of one field (or a field screen interval on a time axis) is expressed by "F", a progressed phase is expressed by "+", and a delayed phase is expressed by "-". Also, the current point is expressed by "0". In a state shown in FIG. 1, at the time a field image Pi(0) is input (current point), a next field screen Pi(+F) input to the first field delay portion 21 exactly before one field display time (hereinafter, simply referred to as 1F), wherein the phase is progressed exactly by 1F, is output from the first field delay portion 21. Also, still next field screen Pi(+2F) input to the first field delay portion 21 before the current point exactly by two field delay time (hereinafter, simply referred to as 2F), wherein the phase is progressed exactly by 2F, is output from the second field delay portion 22.

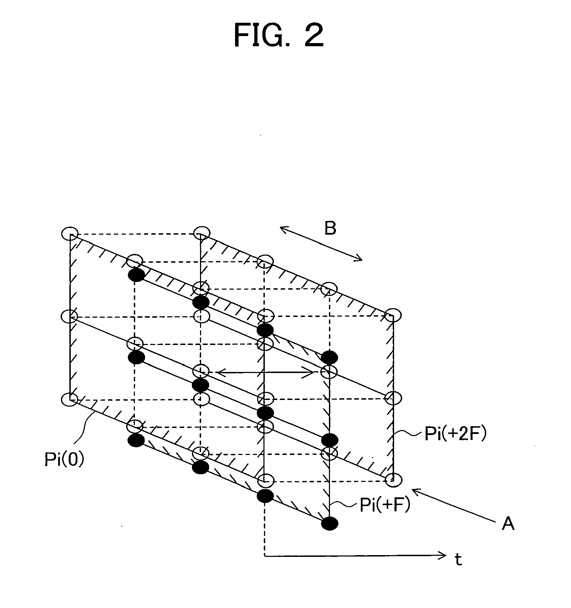

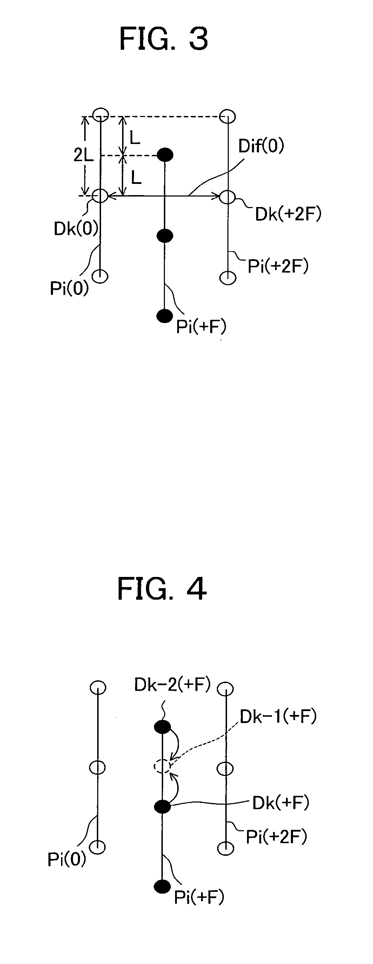

Positional relationship of the three field screens Pi(O), Pi(+F) and Pi(+2F) is shown in FIG. 2. FIG. 2 shows three dimensionally by introducing time axis to two dimensional space of the screen, wherein the time axis is expressed by "→t". Also, FIG. 3 to FIG. 5 show views seeing the positional relationship of the three screen from the front surface A side shown in FIG. 2.

It was explained above that an interlace display screen was displayed through performing interlaced scanning for two times on a screen (one frame) completed as a picture and, in FIG. 2, pixels (or pixel data) belonging to a first field screen by the scanning for the first time are indicated by white circles, and pixels (or pixel data) belonging to a second field screen by the scanning for the second time are indicated by black circles. In this case, one frame is configured by combining an input screen Pi(0) at the current point and a screen Pi(+F) wherein the phase is progressed exactly by 1F from that, and another one frame is configured by a set of next image having a still progressed phase, that is, Pi(+2F) and a not shown Pi(+3F). As shown in FIG. 3, the second field screen Pi(+F) indicating pixels by black circles and the first field screens Pi (0) and Pi(+2F) on its both sides have a positional relationship in the vertical direction shifted exactly by one line scanning interval L. Also, since it is interlaced scanning, intervals of pixel data lines of each screen are set to be two-line scanning intervals (2L).

A frame difference calculation portion 3 shown in FIG. 1 (indicated by "ΔP" in the figure) receives as an input an input field screen Pi(0) at the current point and a field screen Pi(+2F) after delaying by one frame from the second field delay portion 22, and obtains, for example, an absolute value of a difference of luminance data (hereinafter, referred to as a frame difference) for each pixel between frames by calculation. For example, as shown in FIG. 3, a frame difference Dif(0) is obtained from pixel data Dk(0) in the field screen Pi(0) and pixel data Dk (+2F) in the field screen Pi(+2F), and the processing is repeated for each pixel. The frame difference Dif(0) is successively generated by calculation for each pixel and input respectively to the pixel data interpolation portion 4 and the history value generation portion 5.

The pixel data interpolation portion 4 comprises, as shown in FIG. 1, an in-field interpolation portion 41, a inter-field interpolation portion 42, a pixel data mixing portion (indicated by "MIX." in the figure) 43, and a mixture ratio Rmix setting portion 44.

While not particularly illustrated, the in-field interpolation portion 41 comprises a line delay portion for delaying input field image data for each line and an interpolating portion for generating new line data between lines of an interlaced image by interpolation using delayed line data, etc. As a result, the in-field interpolation portion 41 can generate an interpolation method suitable to a moving image, that is, being capable of newly generating pixel data of a line required for a noninterlaced image only by data in the same field.

The in-field interpolation method is not particularly limited, but, for example, as shown in an example in FIG. 4, by multiplying 0.5 respectively with pixel data Dk(+F) of a focused line and pixel data Dk-2(+F) obtained by delaying the same by one line (two scanning lines in the frame) in a field screen Pi(+F) after delaying by 1F and mixing, new pixel data Dk-1(+F) is generated for an in-between scanning line, which did not have pixel data.

Below, a field screen composed of new pixel data for a moving image generated by a plurality of pixel data in the same field as above is referred to as "a moving image interpolation screen Pm".

The inter-field interpolation portion 42 receives as an input two-system pixel data lines (two field screens) wherein the phases are shifted exactly by one field from each other. While not particularly illustrated, the inter-field interpolation portion 42 comprises an interpolation portion for generating new line data between lines of an interlaced image by interpolation from the input two-system pixel data lines. As a result, the inter-field interpolation portion 42 is capable of newly generating an interpolation method suitable to a still image, that is, pixel data of a line necessary for a noninterlaced image from data in different fields adjacent in terms of time.

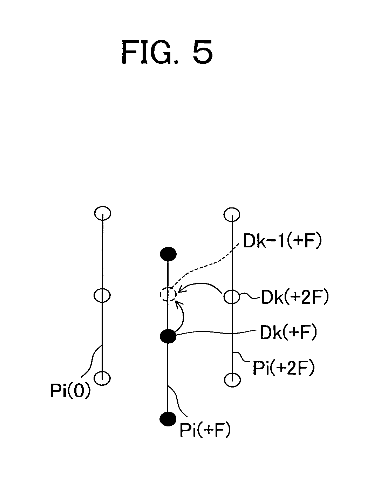

While the inter-field interpolation method is not particularly limited, for example, as shown in FIG. 5, by multiplying 0.5 respectively with pixel data Dk(+F) of a focused line belonging to the field screen Pi(+F) after delaying by 1F and pixel data Dk(+2F) corresponding to the field screen Pi(+2F) after delaying by 2F and mixing, new pixel data Dk-1(+F) is generated for a scanning line which did not have pixel data on the field screen Pi(+F) after delaying by 1F.

Below, a field screen composed of new pixel data for a still image generated by a plurality of pixel data belonging to different fields as above will be called "a still image interpolation screen Ps".

The pixel data mixture portion 43 receives as an input a moving image interpolation screen Pm from the in-field interpolation portion 41, receives as an input a still image interpolation screen Ps from the inter-field interpolation portion 42, successively mixes pixel data of the two interpolation screens Pm and Ps by a predetermined mixture ratio Rmix determined for each pixel and outputs a new pixel data line (output screen) Po. While not particularly illustrated, such a function of the pixel data mixture portion 43 is realized by, for example, two multipliers for multiplying the respective interpolation data with coefficients suitable to realizing the mixture ratio Rmix and an adder for adding outputs of the two multipliers.

The mixture ratio Rmix of the pixel data mixture portion 43 in the present embodiment is made changeable. For example, the coefficients of the two multipliers are made changeable in the above configuration.

The mixture ratio setting portion 44 as a means for setting and changing the mixture ratio Rmix controls the mixture ratio Rmix in accordance with an input history value. The mixture ratio setting portion 44 normally receives as an input a frame difference Dif(0) from the frame difference calculation portion 3 and, by using the mixture ratio in accordance with the frame difference Dif(0) as reference, changes the mixture ratio to be the reference in accordance with the input history value H. Controlling of the mixture ratio in accordance with the history value H by the mixture ratio setting portion 44 and provision of the history value generation portion 5 are one of significant characteristics of the present embodiment.

The history value generation portion 5 compares the input frame difference Dif(0) with the reference REF by the size, and comprises a motion comparison portion 51 (indicated by "COMP." in the figure) for determining a moving image or a still image, a history value memory 52 (indicated by "H memory" in the figure) for holding and updating the number of times of continuously determining as "a still image" by the motion comparison portion 51 for each pixel, and a history value delay portion 53 for delaying the held history value H by an amount of two fields (2F), that is, an amount of one frame. The history value memory 52 has a memory space assigned with an address for each pixel and is configured to be capable of incrementing the held data (history value) for each pixel specified by the address. Note that a history value at a current point of a focused pixel is indicated by "Hk(0) in FIG. 1 and a history value after delaying by 2F is indicated by Hk(+2F).

In detail, the motion comparison portion 51 compares the input frame difference Dif(0) with a predetermined reference REF for determining a boundary of a moving image and still image and, when the input frame difference Dif(0) is a reference REF or larger, determines as "a moving image, while when the input frame difference Dif(0) is smaller than the reference REF, determines as "a still image". The motion comparison portion 51 outputs a signal S51, for example, for outputting a high-level pulse every time determination is made to be "a still image". The history value memory 52 increments and outputs the history value Hk(0) of the stored previous pixel by one frame (having a phase progressed by one frame) every time a high-level pulse is outputs due to the signal S51. The history value Hk(0) is successively delayed exactly by 2F and a delayed history value Hk(+2F) is successively input to the mixture ratio setting portion 44. A content stored in the history value memory 52 is re-written by a history value Hk(+2F) output to the mixture ratio setting portion 44. Consequently, it is configured that every time determination is made to be a still image based on the history value Hk(+2F) output to the mixture ratio setting portion 44, the history value is added one by one. Since the calculation of the history value is operated based on the frame difference Dif(0), it is preferable that the history value is counted at the pixel Dk(0) or Dk(+2F) shown in FIG. 3 at this point. On the other hand, as shown in FIG. 5, the pixel Dk(+2F) is used by inter-field interpolation and the pixel Dk(0) is not used. In that point, it is preferable to count the history value at the pixel Dk(+2F), and the history value Hk(0) is delayed by 2F to be used for setting a mixture ratio in the present embodiment.

Note that the motion comparison portion 51 and the frame difference calculation portion 3 compose an embodiment of "a motion detection portion" of the present invention.

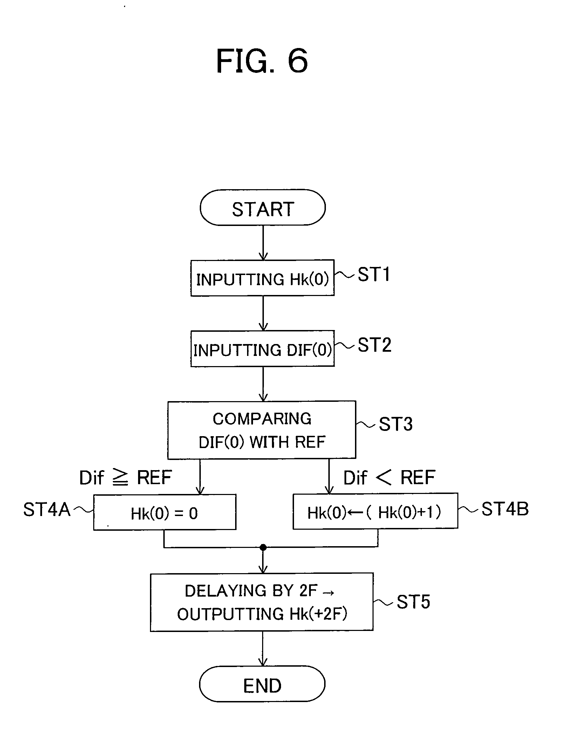

FIG. 6 is a flowchart of the history value generation processing.

At a point of starting the processing shown in FIG. 6, it is assumed that the history value stored in the history value memory 52 is Hk(-2F). In a step ST1, a history value obtained by delaying by one frame, that is, two fields (2F) in the previous processing, that is Hk(0) is input to the history value memory 52.

When a frame difference Dif(0) is input in a step ST2, the frame difference Dif(0) is compared with the reference REF in the next step ST3. When the frame difference Dif(0) is the reference REF or larger, determination is made that the pixel belongs to a moving image and the history value Hk(0) of a pixel stored at an address corresponding to the history value memory 52 is reset in a step ST4A. As a result, an image portion to be processed is determined to become out of the still state and entered to a moving image state. On the other hand, when the frame difference Dif(0) is smaller than the reference REF, it is determined that the pixel belongs to a still image, the history value Hk(0) of a still image stored in an address corresponding to the history value memory 52 is incremented and it is determined that a still image state continues at an image portion to be processed in a step ST4B.

After that, in a step ST5, the history value Hk(0) is delayed exactly by 2F by the history value delay portion 53, and a delayed history value Hk(+2F) is sent to the mixture ratio setting portion 44, and a content in a memory region at an address corresponding to the pixel in the history value memory 52 is re-written by the value of the delayed history value Hk(+2F).

This processing is performed repeatedly every time a frame difference Dif is input for each pixel.

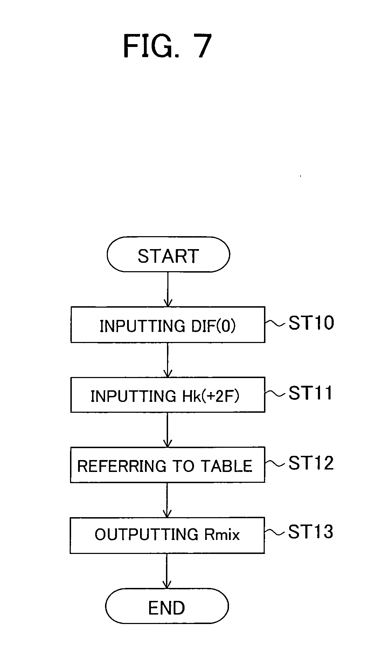

FIG. 7 is a flowchart of mixture ratio setting processing.

When the mixture ratio setting portion 44 receives as an input a frame difference Dif(0) in a step ST10 and receives as an input a history value Hk(+2F) corresponding to a frame difference Dif(0) in a step ST11, it obtains a mixture ratio Rmix of a moving image interpolation screen Pm and a still image interpolation screen Ps in the next step ST12. The calculation may be operated point by point, but a table for specifying a mixture ratio by two input parameters: a frame difference and a history vale is incorporated here, and the mixture ratio Rmix is obtained by referring to the table.

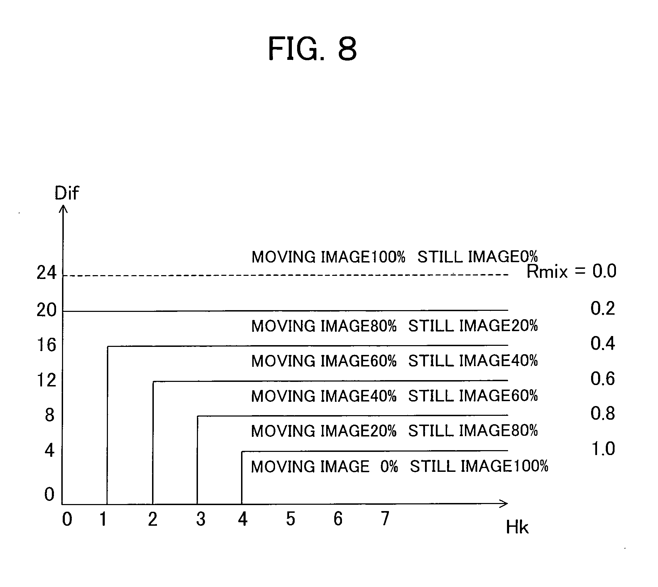

FIG. 8 shows a graph of an example of a relationship of the two input parameters and a mixture ratio in the table.

Conventionally, the mixture ratio was determined only by a frame difference regardless of the number of times that determination is made to be a still image but, in the present embodiment as an example shown in FIG. 8, the mixture ratio is determined to be constant regardless of a frame difference when the history value is smaller than a certain value. Note that the graph is just an example and there are a variety of methods for determining the mixture ratio. When seeing in perspective, the larger the history value, the closer to a still image the mixture ratio is determined when the frame differences are the same; and the smaller the frame difference is, the closer to a still image the history value is determined when the history values are the same. Here, when the frame differences are the same, it is not always the case that the history value always has to be close to a still image when the history value is large. As in the example in FIG. 8, a portion where a mixture ratio does not change even when the history value changes may be partially included. "When seeing in perspective" means the mixture ratio changes along with the history value in a long span.

Note that "the larger the history value is, the closer to an interpolation method of a still image an interpolation method is changed" in the present invention includes the case of seeing in perspective as above. Namely, in the present invention, other than the case where the larger the history value is, the closer to a still image the interpolation method gradually becomes, there is a part where an interpolation method does not change even when the history value changes in the middle. But when seeing in perspective, the case where the interpolation method changes closer to a still image as the history value becomes larger is also included.

Note that FIG. 8 shows examples of values of a mixture ratio of a still image. In this case, Rmix=0 in the case of a complete moving image, Rmix=1.0 in the case of a complete still image, and the Rmix value may be set close to 1 as it gets closer to the still image between them.

In the present embodiment, when determining a mixture ratio of a moving image interpolation screen Pm and a still image interpolation screen Ps based on a frame difference Dif, by referring to a history value as the number of times that determination is continuously made to be a still image, it is possible to refer to a motion state of a large number of fields in the past in the same way as in the case of using a large number of field delay memories. Therefore, determination of a moving image or a still image becomes assured. Also, since the mixture ratio of interpolation screens can be more gently changed, so that it is possible to prevent that an image immediately after becoming still is abruptly subjected to still image processing and looks as if the resolution abruptly improves.

Furthermore, a threshold (reference REF) of still image history used at the time of calculating a history value of a still image shown in FIG. 8 can be set sufficiently large comparing with noise components of a frame difference, so that the history value is hard to be affected by a noise of a frame difference.

The parameter called a history value introduced in the present embodiment indicates that the larger the value, the higher the possibility of being a still image. Accordingly, when the history value of a still image is large, determination can be made to be closer to a still image comparing with determination only by a field difference. As a result, an effect of converting motion adaptive interlace and non-interlace can be improved in accordance with a variety of cases.

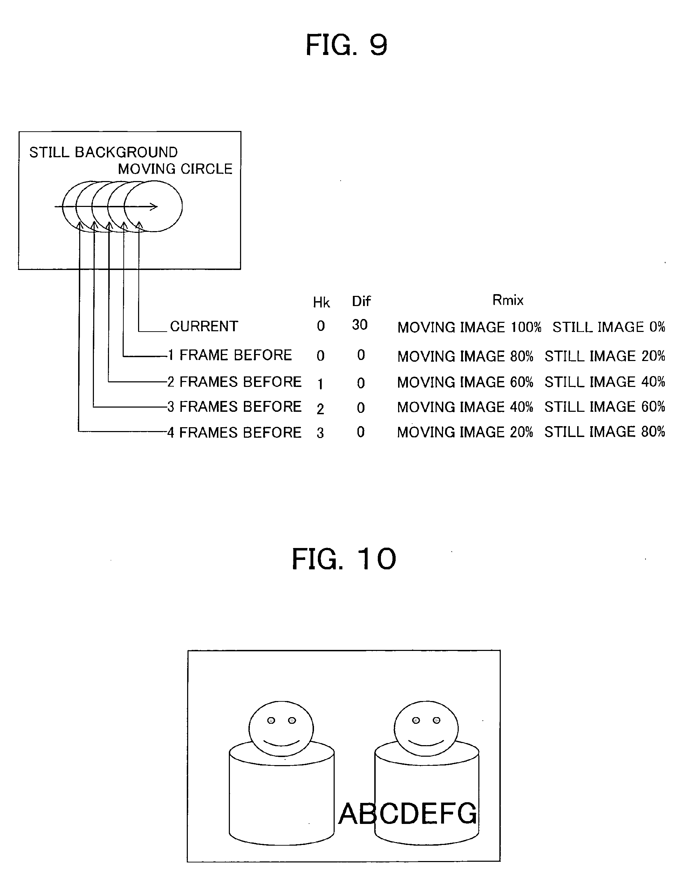

For example, when a pattern repeating by a predetermined cycle moves at a speed adaptive to the cycle, there is a pattern portion always determined to be a still image when seeing by a certain time interval at a pixel position where the pattern is repeatedly displayed. However, since the number of times (history value) that determination to be a still image is counted for each pixel in the present embodiment, the history value of the still image becomes intermittent at a cycle corresponding to a width of the pattern. Namely, since the history value is reset when it reaches a certain value, when seeing in perspective by using the history value, the predetermined cyclic repeating pattern is not determined to be a complete still image nor a complete moving image. Therefore, a mixture ratio becomes adaptive to the cycle of the repeating pattern and the moving speed, and new pixel data is generated at the pixel position by the mixture ratio. Also, as shown in FIG. 9, even when determination is made close to a still image at first, there is an advantage that determination is made close to a moving image when a time that a certain pattern moves is long.

Also, when tickers, such as alphabets, move as if they flow, a history value between the letters becomes intermittent, so that pixel data is generated at a position of displaying the tickers at a mixture ratio adaptive to the letter intervals and moving speed in the same way.

Furthermore, as shown in FIG. 10, at edge portions of still image tickers (alphabet letters) surrounded by a moving image, periphery pixel information is not reflected and only a history value at the pixel becomes information for making decision, so that the history value at the pixel depends on a displaying time of the tickers and becomes sufficiently large, and determination close to a complete still image can be made. Accordingly, new pixel data is generated at a mixture ratio close to a still image at the edge portions of the still image tickers.

### Second Embodiment

The present embodiment relates to a change of a history value generation portion.

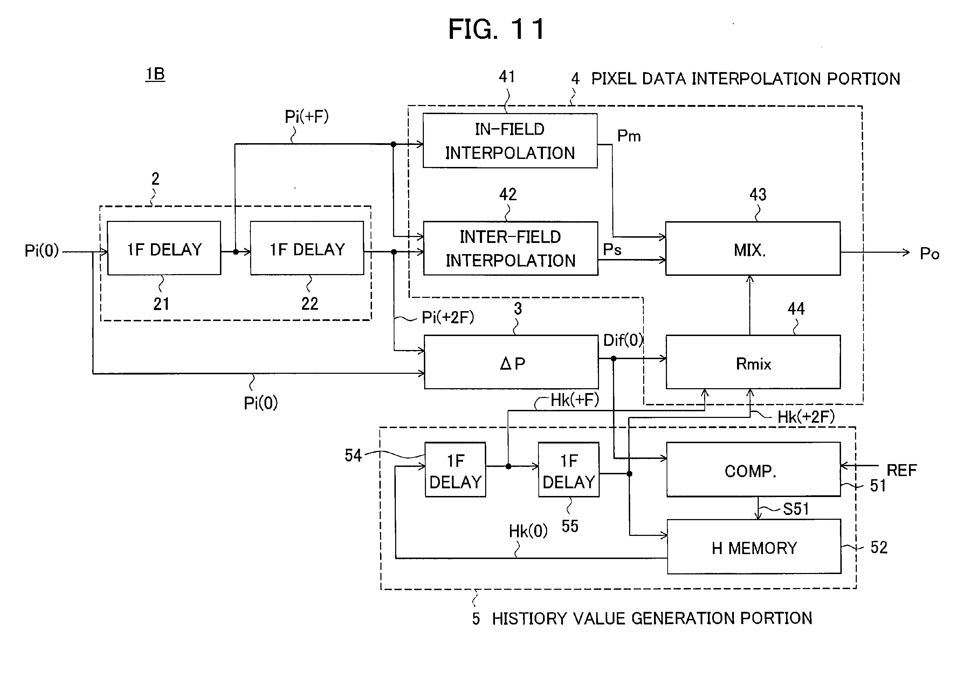

FIG. 11 shows a block diagram of an image processing apparatus according to a second embodiment.

A different point of the image processing apparatus 1B from the image processing apparatus 1A shown in FIG. 1 (first embodiment) is that the history value delay portion of the history value generation portion 5 is divided to a first history value field delay portion 54 for delaying by one field and a second history value field delay portion 55 and, from the intermediate connection point, a history value Hk(+F) after delayed by 1F is output. The history value Hk(+F) after delaying by 1F is input to a mixture ratio setting portion 44 together with a history value Hk(+2F) after delaying by 2F output from the second history value field delay portion 55.

As a result, the mixture ratio setting portion 44 in the present embodiment also refers to a pixel used for interpolation in a 1F delay screen Pi(+F), for example, in the example shown in FIG. 4, a history value Hk(+2F) of a pixel Dk (+F) and/or Dk-2 (+F) . Therefore, more sophisticated and delicate determination becomes possible.

In the first embodiment, when a history value was Hk(+2F) with the same frame difference Dif, the mixture ratio Rmix was determined to be one, while in the present embodiment, the mixture ratio can be controlled to be delicately changed furthermore by a history value Hk(+F). Also, for example, when history values Hk(+F) of pixels Dk (+F) and Dk-2 (+F) shown in FIG. 4 are both "0", in other words, it is determined there is high tendency that the both are a moving image. Since a pixel to be interpolated between the pixels is sandwiched by a moving image pixels from above and below even if it is determined to be a still image based on a history value shown in the first embodiment, it is possible to add determination of outputting a mixture ratio close to a moving image. As explained above, in the second embodiment, a variety of determination can be made by combining a larger number of history values. Consequently, highly reliable motion adaptive controlling becomes possible.

Note that in the first and second embodiments, a frame difference is also obtained between pixels adjacent in the direction (scanning direction) of an arrow shown by "B" in FIG. 2, so that accuracy can be heightened in determination of a moving image and a still image. Also, by counting a history value in pixels adjacent in the scanning direction, accuracy of the history value can be also heightened.

## Claims

1. An image processing apparatus for converting an interlaced image data to a noninterlaced image data, comprising:
a motion detection portion (3, 51) for comparing pixel data of an interlaced image (pixel data Di(0) and Di(+2F) comprising field screen Pi (0) and Pi (+2F), hereinafter, be described by reference numerals of the field screen to which belonging the pixel data in consideration of correspondence to drawings) to perform a motion detection;
a history value generation portions (52, 53) for generating a history value (Hk) showing the number of times that determination is continuously made to be "a still image" based on a motion detection result (Dif(0)) from the motion detection portion; and
a pixel data interpolation portion (4) for mixing a pixel data (Pm) generated by interpolation in a field and a pixel data (Ps) generated by interpolation between a plurality of fields based on pixel data of the interlaced image at a mixture ratio (Rmix) in accordance with the motion detection result (Dif(0)) and the history value (Hk), wherein the larger the history value (Hk) is, the larger amount of pixel data (Ps) generated by interpolation between fields the pixel data interpolation portion (4) mixes.

2. An image processing apparatus as set forth in claim 1, wherein said pixel data interpolation portion (4) comprises;
an in-field interpolation portion (41) for generating the pixel data (Pm) by interpolation from a pixel data (Pi(+F)) in a filed;
an inter-field interpolation portion (42) for generating the pixel data (Ps) by interpolation from pixel data (Pi(+F) and Pi(+2F)) in a plurality of filed;
a pixel data mixing portion (43) for mixing the pixel data (Pm) from the in-field interpolation portion (41) and the pixel data (Ps) from the inter-field interpolation portion (42) at a predetermined mixture ratio (Rmix); and
a mixture ratio setting portion (44) for changing the mixture ratio (Rmix) determined by the motion detection result (Dif(0)) of the motion detection portion (3, 51) and the history value (Hk) in such a way that the larger the history value (Hk) is, the higher a ratio of the pixel data (Ps) from the inter-field interpolation portion (42) becomes.

3. An image processing apparatus as set forth in claim 1, wherein said history value generation portions (52, 53) generates a history value (Hk(+2F)) for interpolation of an adjacent pixel in a field delayed by one field from a field where a pixel data to be generated by the interpolation and updates with respect to each interpolation.

4. An image processing apparatus as set forth in claim 1, wherein said history value generation portions (52, 53) generates a history value (Hk(+F)) for an interpolation of an adjacent pixel in a field differing from a field where a pixel data to be generated by the interpolation, generates a history value (Hk(+2F)) for an interpolation of an adjacent pixel in the same field where a pixel data to be generated by the interpolation, and updates respectively with respect to each interpolation.

5. An image processing method of converting an interlaced image data to a noninterlaced image data, comprising the steps of:
motion-detecting by comparing pixel data (Pi(0) and Pi(+2F)) of an interlaced image pixel-by-pixel between frames to perform a motion detection;
generating a history value (Hk) showing the number of times that determination is continuously made to be "a still image" based on a result of the motion detection; and
interpolating by mixing pixel data (Pm) generated by interpolation in a field and pixel data (Ps) generated by interpolation between a plurality of fields based on pixel data of the interlaced image at a mixture ratio (Rmix) in accordance with the motion detection result (Dif(0)) and the history value (Hk), wherein the larger the history value (Hk) is, the larger amount of pixel data (Ps) generated by interpolation between fields mixes.

6. An image processing method as set forth in claim 5, wherein said interpolating step of pixel data further comprises;
in-field interpolating by generating the pixel data (Pm) of a line having no pixel data in a field by interpolation from pixel data (Pi(+F)) in the filed;
inter-field interpolating by generating the pixel data (Ps) by interpolation from pixel data (Pi(+F) and Pi(+2F)) in a plurality of filed;
mixing of pixel data by mixing the pixel data (Pm) generated by the in-field interpolating and the pixel data (Ps) generated by the inter-field interpolation portion (42) at a predetermined mixture ratio (Rmix); and
setting of a mixture ratio by changing the mixture ratio (Rmix) determined by the motion detection result (Dif(0)) of the motion detection and the history value (Hk) in such a way that the larger the history value (Hk) is, the higher a ratio of the pixel data (Ps) generated by the inter-field interpolatiing becomes.
